(19) Europäisches Patentamt
European Patent Office
Office européen des brevets

(11) **EP 1 720 758 B1**

(12) **EUROPÄISCHE PATENTSCHRIFT**

(45) Veröffentlichungstag und Bekanntmachung des Hinweises auf die Patenterteilung:
**29.06.2016 Patentblatt 2016/26**

(21) Anmeldenummer: **05716813.0**

(22) Anmeldetag: **25.02.2005**

(51) Int Cl.:
*B62D 15/02* (2006.01)     *B60Q 1/48* (2006.01)

(86) Internationale Anmeldenummer:
**PCT/EP2005/050822**

(87) Internationale Veröffentlichungsnummer:
**WO 2005/085044 (15.09.2005 Gazette 2005/37)**

(54) **EINPARKHILFE**

PARKING AID

DISPOSITIF D'AIDE AU STATIONNEMENT

(84) Benannte Vertragsstaaten:
**DE FR**

(30) Priorität: **05.03.2004 DE 102004011407**
**16.02.2005 DE 102005006965**

(43) Veröffentlichungstag der Anmeldung:
**15.11.2006 Patentblatt 2006/46**

(73) Patentinhaber: **Continental Teves AG & Co. oHG**
**60488 Frankfurt (DE)**

(72) Erfinder:
• **LÜKE, Stefan**
**61191 Rosbach vor der Höhe (DE)**
• **ARBITMAN, Maxim**
**61348 Bad Homburg (DE)**

(74) Vertreter: **Bobbert, Christiana**
**Conti Temic microelectronic GmbH**
**Patente & Lizenzen**
**Sieboldstrasse 19**
**90411 Nürnberg (DE)**

(56) Entgegenhaltungen:
**EP-A- 0 846 593        EP-A- 1 361 139**
**EP-A- 1 361 459        WO-A1-2004/007232**
**DE-A1- 3 813 083       DE-A1- 3 844 340**
**DE-A1- 10 225 894      DE-A1- 19 940 007**

**Beschreibung**

Die Erfindung betrifft eine Einparkhilfe für ein Fahrzeug. Die Erfindung betrifft ebenso ein Parklückenvermessungsmodul für ein Fahrzeug.

Die Erfindung betrifft auch ein Verfahren zum Vermessen einer Parklücke für ein Fahrzeug.

DE 19940007 A1 offenbart Verfahren nach den Oberbegriffen der Ansprüche 1 und 2.

Aufgabe der Erfindung ist es, eine Einparkhilfe und ein Parklückenvermessungsmodul und ein Verfahren zu schaffen, die/das ein Vermessen einer Parklücke, insbesondere für ein automatisches Fahren oder Lenken des Fahrzeugs oder eine Unterstützung des Fahrers während seiner Lenktätigkeit beim Einfahren in eine Parklücke, auf relativ einfache und komfortable Weise ermöglicht.

Die Aufgabe wird durch die Merkmale der unabhängigen Patentansprüche gelöst.

Bevorzugte Ausgestaltungen sind in den Unteransprüchen angegeben.

Die Aufgabe wird durch eine Einparkhilfe für ein Fahrzeug nach Anspruch 15 gelöst, die dadurch gekennzeichnet ist, dass die Einparkhilfe ein autonomes Fahren oder Lenken des Fahrzeugs auf einer Bahn für ein Einfahren in eine Parklücke ermöglicht oder einen Fahrer des Fahrzeugs bei einem Einparkvorgang auf der Bahn für das Einfahren in die Parklücke unterstützt, mittels eines auf das Lenkrad aufgebrachten Lenkmoments, wobei der Fahrer durch mindestens einen künstliche Lenkanschlag, vorzugsweise ein oder zwei künstliche Lenkanschläge, auf der Bahn für das Einfahren in die Parklücke geführt wird, und dass eine Vermessung der Parklücke durch eine seitliche Abstandsmessung und eine Positionsbestimmung aus Signalen von Raddrehzahlsensoren und einem Lenkwinkelsensor erfolgt.

Bei einer Ausführungsform nach der Erfindung werden dem Fahrer komfortable Handlungsanweisungen durch haptische Rückmeldungen gegeben. Dabei bleibt sichergestellt, dass der Fahrer während des Einparkvorganges diese Handlungsanweisungen umsetzt oder bewusst überstimmt.

Bei einer alternativen Ausführungsform nach der Erfindung wird das Fahrzeug automatisch auf einer bestimmten Bahn in eine Parklücke gelenkt.

Die Aufgabe wird auch durch ein Parklückenvermessungsmodul für ein Fahrzeug nach Anspruch 14, insbesondere für eine Einparkhilfe nach der Erfindung, gelöst, bei dem eine Vermessung einer Parklücke durch eine seitliche Abstandsmessung und eine Positionsbestimmung aus Signalen von Raddrehzahlsensoren und einem Lenkwinkelsensor erfolgt.

Die Aufgabe wird auch durch ein Verfahren zum Vermessen einer Parklücke für ein Fahrzeug nach Anspruch 1, insbesondere für eine Einparkhilfe nach der Erfindung, gelöst, das dadurch gekennzeichnet ist, dass eine Vermessung der Parklücke durch eine seitliche Abstandsmessung und eine Positionsbestimmung aus einem Lenkwinkel, vorzugsweise mit einem Lenkwinkelsensor gemessener Lenkwinkel, und einer Wegänderungs-Information, vorzugsweise auf Grundlage von Raddrehzahlsensoren gemessener Weg, erfolgt.

Die Erfindung dient insbesondere einer Vermessung einer Parklücke für rückwärts Einparken. Dabei wird die Parklücke aus den Sensorsignalen im Vorbeifahren des Fahrzeugs an der Parklücke erkannt und vermessen.

Es ist nach der Erfindung vorgesehen, dass das Vermessen der Parklücke erfolgt durch eine Aufteilung in folgende Schritte:

- eine grobe Erkennung von Ecken der die Parklücke begrenzenden Objekte oder Fahrzeuge, insbesondere der Fahrzeugecken vor und hinter der Parklücke,
- eine Bestimmung gültiger Bereiche für Fronten der die Parklücke begrenzenden Objekte oder Fahrzeuge, insbesondere der Fahrzeugecken vor und hinter der Parklücke,
- eine Bestimmung der Fronten der die Parklücke begrenzenden Objekte oder Fahrzeuge, insbesondere der Fahrzeugfronten vor und hinter der Parklücke,
- eine Berechnung der Ecken der die Parklücke begrenzenden Objekte oder Fahrzeuge, insbesondere der Fahrzeugecken vor und hinter der Parklücke, aus diesen gültigen Bereichen.

Das bedeutet, es werden nach einem zunächst groben Erkennen der Parklücke Toleranzbereiche festgelegt. Danach wird die Fahrzeugfront ausgerichtet (Geradengleichung). Dann wird eine Abweichung der Messsignale von den ermittelten Signalen bestimmt. In Abhängigkeit von den Abweichungen werden die Eckpositionen ermittelt. Schließlich wird die Parklücke bestimmt bzw. vermessen, d.h. deren Größe und Position relativ zum einzuparkenden Fahrzeug ermittelt.

Es ist nach der Erfindung vorgesehen, dass die Signale der Raddrehzahlsensoren Interrupt-Signale der hinteren Raddrehzahlsensoren der Räder einer Hinterachse (Hinterräder) sind und dass nach Maßgabe dieser vorzugsweise gemittelten Signale eine gefahrene Wegänderung des Hinterachsmittelpunktes, insbesondere bezüglich eines kartesischen Koordinatensystems, ermittelt wird.

Es ist nach der Erfindung vorgesehen, dass ein kartesisches Koordinatensystem als "globales" kartesisches Koordinatensystem in einer Initialisierungsphase für einen Einparkvorgang festgelegt wird.

Es ist nach der Erfindung vorgesehen, dass eine Wegänderung des Hinterachsmittelpunktes des Fahrzeugs sowie ein von dem Lenkwinkelsensor gemessener Lenkwinkel $\delta_{ist}$ zur einer kontinuierlichen Positions- und Gierwinkelbestimmung ($\psi$) relativ zu einem beim Start gesetzten Koordinatensystem berechnet wird.

Es ist nach der Erfindung vorgesehen, dass eine aktuelle Position des Fahrzeugs ermittelt wird, mit den folgenden Schritten:

- Bestimmung einer Strecke $\Delta s$, um die sich das Fahrzeug seit einem letzten Abtastschritt bewegt hat, auf Grundlage von den Raddrehzahlsensor-Signalen und einem Skalierungsfaktor,
- Berechnung des Gierwinkel $\psi_{ist}$ des Fahrzeugs auf Grundlage der bestimmten Strecke $\Delta s$, den Lenkwinkelsensor-Signalen und dem Radstand $l$ des Fahrzeugs,
- Ermittlung des jeweils aktuellen Gierwinkel $\psi_{ist}$ mittels der rekursiven Gleichung

$$\Psi_{ist}(k+1) = \Psi_{ist}(k) + \frac{\Delta s}{l} * sin(\delta_{ist})$$

- Bestimmung der aktuellen x-Istposition $x_{ist}$ und y-Istposition $y_{ist}$ des Hinterachsmittelpunktes aus dem aktuellen Gierwinkel und aktuellen Lenkwinkel.

Es ist nach der Erfindung vorgesehen, dass auf Grundlage einer kontinuierlich ermittelten Position und eines kontinuierlich ermittelten Gierwinkels ($\psi$) relativ zu einem beim Start gesetzten Koordinatensystem sowie eines Abstandes d aus der seitlichen Abstandsmessung eine x-y-Position von die Parklücke begrenzenden Objektoberflächen relativ zu einem globalen Koordinatensystem berechnet werden.

Es ist nach der Erfindung vorgesehen, dass das Erkennen der Parklücke bzw. der die Parklücke begrenzenden Objektoberflächen unabhängig von gespeicherten Werten oder Zwischenwerten im wesentlichen nur aufgrund einer Änderung eines Abstandes d aus der seitlichen Abstandsmessung erfolgt.

Es ist nach der Erfindung vorgesehen, dass Messwerte bzw. Sensorsignale der seitlichen Abstandsmessung und/oder Positionsbestimmung zumindest teilweise gefiltert werden.

Es ist nach der Erfindung vorgesehen, dass ein (globales) kartesisches Koordinatensystem für einen Einparkvorgang festgelegt wird und das in Abhängigkeit von Sprüngen des Abstandswerts d am Parklückenanfang und Parklückenende ein Toleranzbereich für die x-Koordinate vorgegeben oder ermittelt wird, in dem eine Ecke der die Parklücke begrenzenden Objekte oder Fahrzeuge liegen könnte.

Es ist nach der Erfindung vorgesehen, dass Fronten der die Parklücke begrenzenden Fahrzeuge (Fahrzeugfronten vor und hinter der Parklücke) aus den gemessenen und außerhalb des Toleranzbereiches liegenden Werten ermittelt werden (d. h. ohne die in den Zoleranzbereichen liegenden Werte) und die Fahrzeugfronten des vorherigen und des nachfolgenden Fahrzeugs vereinfacht als Geradengleichung beschrieben werden, wobei diese Gleichungen jeweils vorzugsweise durch die Methode der kleinsten Fehlerquadrate ermittelt werden.

Es ist nach der Erfindung vorgesehen, dass aus den Abweichungen der Messwerte von den ermittelten Geraden die genaue X-Position der Ecke ermittelt wird. Anschließend wird die ermittelte X-Koordinate der Ecke in die Geradengleichung eingesetzt, um die Y-Position der Ecke zu bestimmen.

Es ist nach der Erfindung vorgesehen, dass Fronten der die Parklücke begrenzenden Fahrzeuge (Fahrzeugfronten vor und hinter der Parklücke) ermittelt werden und dass von den ermittelten Fahrzeugfronten auf einen Verlauf einer Fahrbahnbegrenzung (Bordstein) geschlossen wird.

Es ist nach der Erfindung vorgesehen, dass die Ermittlung der Parklücke die folgenden Schritte aufweist:

- Warten auf eine erste Parklückenecke
- Passieren der ersten Parklückenecke
- Festlegung eines Toleranzbereiches für die erste Parklückenecke
- Festlegung eines Bereiches für eine erste Fahrzeugfront
- Berechnung eine Geradengleichung für die erste Fahrzeugfront
- Warten auf eine zweite Parklückenecke
- Berechnung der ersten Ecke
- Passieren der zweiten Ecke
- Festlegung eines Toleranzbereiches für die zweite Parklückenecke
- Warten auf einen gültigen Startbereich für ein Einparkensmanöver
- Festlegen des gültigen Bereiches für eine zweite Fahrzeugfront
- Kontinuierliche Berechnung der Geradengleichung für die zweite Fahrzeugfront
- Kontinuierliche Berechnung der zweiten Ecke

- Berechnen der Einfahrtrajektorie (Einfahrtbahn)

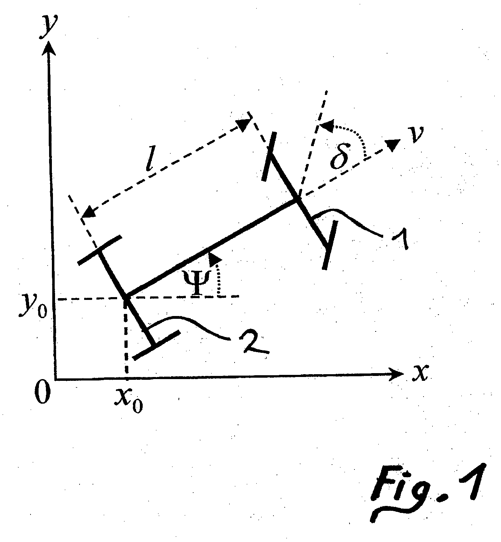

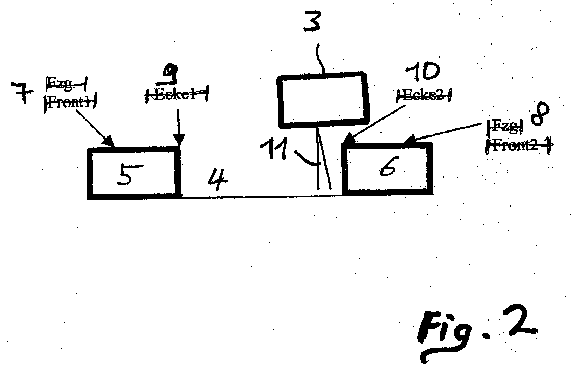

Die Erfindung wird nun anhand eines Ausführungsbeispiels und durch Abbildungen (Fig. 1 und Fig. 2) beispielhaft näher erläutert.

Fig. 1 zeigt die geometrischen Verhältnisse und Positionsparameter für eine Berechnung des Wegs in eine Parklücke.

Fig. 2 zeigt schematisch eine Parklücke und ein darin einzuparkendes Fahrzeug bei der Vermessung der Parklücke.

Gemäß der Erfindung werden Signale der Raddrehzahlsensoren, vorzugsweise die Interrupt-Signale der hinteren Raddrehzahlsensoren (*Wheel_Interrupts_RL* und *Wheel_Interrupts_RR*) verwendet, um eine gefahrene Wegänderung des Hinterachsmittelpunktes relativ zu einem globalen kartesischen Koordinatensystem zu ermitteln.

Die beobachteten Raddrehzahlsensoren-Signale werden dazu gemittelt.

Das globale kartesische Koordinatensystem wird in einer Initialisierungsphase für den gesamten Algorithmus jeweils festgelegt.

Der Weg, d.h. die Wegänderung des Hinterachsmittelpunktes, wird zusammen mit dem gemessenen Lenkwinkel $\delta_{ist}$ [rad] von einem Lenkwinkelsensor zur kontinuierlichen Positions- und Gierwinkelbestimmung ($\psi$) relativ zu einem beim Start gesetzten Koordinatensystem berechnet. Diese Situation ist in der Fig. 1 dargestellt, die das Koordinatensystem (X-und y-Achse), ein schematisch dargestelltes Fahrzeug mit einer lenkbaren Vorderachse 1 und Hinterachse 2 zeigt, die sich am Anfang hier in einer $x_0/y_0$ Hinterachsposition am befindet.

Die aktuelle Position des Fahrzeugs wird vorteilhaft mit Hilfe von drei rekursiven Gleichungen bestimmt.

Es wird zunächst unter zu Hilfenahme von den Raddrehzahlsensor-Signalen und einem Skalierungsfaktor (scaling-Faktor *Mm_per_100_teeth)* die Strecke $\Delta$s, vorzugsweise in der Einheit cm, berechnet, um die sich das Fahrzeug seit dem letzten Abtastschritt, hier insbesondere einem letzten Programmdurchlauf eines Reglerprogramms (der letzte Software loop), bewegt hat.

$$\Delta s = \frac{Wheel\_interrupts\_RR + Wheel\_interrupts\_RL}{2} * Mm\_per\_100\_teeth \qquad (1)$$

Ist diese Strecke bekannt, wird anschließend mit Hilfe des Lenkwinkels am Rad und dem Radstand *l* des Fahrzeugs (siehe Fig. 1) der Gierwinkel $\psi_{ist}$ des Fahrzeugs berechnet.

Der neue Gierwinkel ergibt sich aus folgender rekursiven Formel:

$$\Psi_{ist}(k+1) = \Psi_{ist}(k) + \frac{\Delta s}{l} * sin(\delta_{ist}) \qquad (2)$$

Es kann nun aus Gierwinkel und Lenkwinkel die aktuelle x-Istposition $x_{ist}$ und y-Istposition $y_{ist}$ des Hinterachsmittelpunktes bestimmt werden:

$$x_{ist}(k+1) = x_{ist}(k) + \Delta s * cos(\delta_{ist}(k)) * cos(\Psi_{ist}(k+1)) \qquad (3)$$

$$y_{ist}(k+1) = y_{ist}(k) + \Delta s * cos(\delta_{ist}(k)) * sin(\Psi_{ist}(k+1)) \qquad (4)$$

Mit dieser Positionsinformation kann nun die Parklücke durch einen seitlich ausgerichteten Sensor vermessen werden (siehe Fig. 2).

In der Fig. 2 fährt ein Fahrzeug 3 an einer Parklücke 4 vorbei, die von zwei Fahrzeugen 5,6 bzw. deren Fahrzeugfronten 7,8 und Fahrzeugecken 9,10 begrenzt wird. Das Fahrzeug 3 besitzt einen Sensor, der einen seitlichen Abstand erfassen kann, hier dargestellt durch einen Sensorstrahl 11.

Aus dem seitlich gemessenen Abstand d wird zusammen mit der Positionsänderung des Hinterachsmittelpunktes und dem Gierwinkel $\psi$ die x-*y*-Position der detektierten Objektoberflächen relativ zum globalen Koordinatensystem berechnet.

Liegen mehrere *y*-Messwerte für einen x-Wert vor, so werden diese Werte gemittelt oder es wird der *y*-Wert verwendet, der am weitesten in die Fahrbahn ragt (ungünstigster Fall). Das Erkennen der Parklückenecken erfolgt unabhängig von diesen gespeicherten Werten nur aufgrund der Änderung des vom Sensor gemessenen Abstandes *d*.

Damit einzelne "falsche" Messwerte (Ausreißer) nicht als Ecken erkannt werden, erfolgt eine Filterung, insbesondere nur "schwache" Filterung, des Signals zur Glättung der Ausreißer. Gleichzeitig erfolgt auch eine Filterung des Signals, insbesondere eine "starke" Filterung, zur Glättung der eigentlichen Ecken. Die Differenz zwischen diesen Signalen entspricht der Erkennungsgüte der Ecken, und wird mit einem Schwellwert verglichen. Bei Überschreitung des Schwellwertes wird das Passieren einer Ecke angenommen.

Um die erkannte Eckenposition wird ein Toleranzbereich für die x-Koordinate angenommen, in dem die Ecke liegen könnte. Die berechneten Positionen der Objektoberfläche, die in einem definierten x-Bereich vor dem Toleranzbereich der ersten Ecke gemessen wurden, gelten dann als Teil der ersten Fahrzeugfront.

Die Daten zwischen den beiden Eckenbereichen werden analog zur Parklücke gezählt, die nach der zweiten Ecke zur zweiten Fahrzeugfront.

Aufgrund der erkannten Bereiche Fahrzeugfront 7, Parklücke 4, Fahrzeugfront2 8, können dann aus den gespeicherten Messdaten die Koordinaten der Parklücke berechnet werden.

Die Fahrzeugfronten des vorherigen und des nachfolgenden Fahrzeugs werden vereinfacht als Geradengleichung beschrieben. Diese Gleichungen werden jeweils vorzugsweise durch die Methode der kleinsten Fehlerquadrate (Least-Square Verfahren) ermittelt.

Die Abweichung der gemessenen y-Koordinaten von der Fahrzeugfront - Geradengleichungen im Toleranzbereichen wird gemittelt und eingesetzt, um Aufschlüss über Anfang und Ende der Parklücke zu geben.

Bei Überschreitung einer Abweichungsschwelle werden die beiden x-Koordinaten $x_{edge1}$, $x_{edge2}$ Parklückenecken jeweils bestimmt. Die y-Koordinaten der beiden Parklückenecken $y_{edge1}$, $y_{edge2}$ werden durch das Einsetzen der $x_{edse1}$, $x_{edge2}$ in die jeweiligen Gleichungen der Fahrzeugfronten berechnet.

Um eine vorhandene Rechenleistung über den gesamten Messvorgang besser zu verteilen, wird sie auf folgende Zustände verteilt:

- Warten auf die erste Parklückenecke
- Passieren der ersten Parklückenecke
- Festlegung des Toleranzbereiches für die erste Parklückenecke
- Festlegung des Bereiches für die erste Fahrzeugfront
- Berechnung der Geradengleichung für die ersten Fahrzeugfront
- Warten auf zweite Parklückenecke
- Berechnung der ersten Ecke
- Passieren der zweiten Ecke
- Festlegung des Toleranzbereiches für die zweite Parklückenecke
- Warten auf gültigen Startbereich für das Einparkensmanöver
- Festlegen des gültigen Bereiches für die zweite Fahrzeugfront
- Kontinuierliche Berechnung der Geradengleichung für die zweite Fahrzeugfront
- Kontinuierliche Berechnung der zweiten Ecke
- Berechnen der Einfahrtrajektorie

Die Einfahrtrajektorie (Einfahrtbahn) kann einmalig ohne weitere Messungen berechnet werden. Weitere Messungen während des Einparkvorganges können genutzt werden, um die Berechnung der zweiten Fahrzeugfront zu aktualisieren. In diesem Fall ist aber auch die Neuberechnung der Trajektorie (Bahn) erforderlich.

Das Verfahren bietet auch den Vorteil, auf eine Bordsteinvermessung zu verzichten. In diesem Fall wird von den Fahrzeugfronten 7,8 auf den Bordstein geschlossen.


**Patentansprüche**

1. Verfahren zum Vermessen einer Parklücke für ein Fahrzeug, wobei eine Vermessung der Parklücke durch eine seitliche Abstandsmessung und eine Positionsbestimmung aus einem Lenkwinkel, vorzugsweise einem mit einem Lenkwinkelsensor gemessenen Lenkwinkel, und einer Wegänderungs-Information, vorzugsweise einem auf Grundlage von Raddrehzahlsensoren gemessenen Weg,
erfolgt,
**dadurch gekennzeichnet, dass**
ein kartesisches Koordinatensystem als globales kartesisches Koordinatensystem in einer Initialisierungsphase für einen Einparkvorgang festgelegt wird,
eine x- y - Position von die Parklücke begrenzenden Objektoberflächen relativ zu dem globalen Koordinatensystem berechnet wird, und dass in Abhängigkeit von Sprüngen eines Abstandswerts aus der seitlichen Abstandsmessung am

Parklückenanfang und Parklückenende ein Toleranzbereich für die x-Koordinate vorgegeben oder ermittelt wird, in dem eine Ecke der die Parklücke begrenzenden Objekte oder Fahrzeuge liegen könnte.

2. Verfahren für eine Einparkhilfe für ein Fahrzeug, wobei die Einparkhilfe ein autonomes Fahren oder Lenken des Fahrzeugs auf einer Bahn für ein Einfahren in eine Parklücke ermöglicht oder einen Fahrer des Fahrzeugs bei einem Einparkvorgang auf der Bahn für das Einfahren in die Parklücke unterstützt, mittels eines auf das Lenkrad aufgebrachten Lenkmoments, wobei der Fahrer durch mindestens einen künstlichen Lenkanschlag, vorzugsweise einen oder zwei künstliche Lenkanschläge, auf der Bahn für das Einfahren in die Parklücke geführt wird, und dass eine Vermessung der Parklücke durch eine seitliche Abstandsmessung und eine Positionsbestimmung aus Signalen von Raddrehzahlsensoren und einem Lenkwinkelsensor erfolgt, **dadurch gekennzeichnet, dass** ein kartesisches Koordinatensystem als globales kartesisches Koordinatensystem in einer Initialisierungsphase für einen Einparkvorgang festgelegt wird, eine x- y - Position von die Parklücke begrenzenden Objektoberflächen relativ zu dem globalen Koordinatensystem berechnet wird, und dass in Abhängigkeit von Sprüngen eines Abstandswerts aus der seitlichen Abstandsmessung am Parklückenanfang und Parklückenende ein Toleranzbereich für die x-Koordinate vorgegeben oder ermittelt wird, in dem eine Ecke der die Parklücke begrenzenden Objekte oder Fahrzeuge liegen könnte.

3. Verfahren nach einem der Ansprüche 1 bis 2, **dadurch gekennzeichnet, dass** die Ermittlung der Parklücke die folgenden Schritte aufweist:

   - grobe Erkennung von Ecken der die Parklücke begrenzenden Objekte oder Fahrzeuge, insbesondere der Fahrzeugecken vor und hinter der Parklücke,
   - Bestimmung gültiger Bereiche für Fronten der die Parklücke begrenzenden Objekte oder Fahrzeuge, insbesondere der Fahrzeugfronten vor und hinter der Parklücke,
   - Bestimmung der Fronten der die Parklücke begrenzenden Objekte oder Fahrzeuge, insbesondere der Fahrzeugfronten vor und hinter der Parklücke, und
   - Berechnung der Ecken der die Parklücke begrenzenden Objekte oder Fahrzeuge, insbesondere der Fahrzeugecken vor und hinter der Parklücke, aus diesen gültigen Bereichen.

4. Verfahren nach einem der Ansprüche 1 bis 3, **dadurch gekennzeichnet, dass** die Signale der Raddrehzahlsensoren Interrupt-Signale der hinteren Raddrehzahlsensoren der Räder einer Hinterachse (Hinterräder) sind und dass nach Maßgabe dieser vorzugsweise gemittelten Signale eine gefahrene Wegänderung des Hinterachsmittelpunktes, insbesondere bezüglich eines kartesischen Koordinatensystems, ermittelt wird.

5. Verfahren nach einem der Ansprüche 1 bis 4, **dadurch gekennzeichnet, dass** eine Wegänderung des Hinterachsmittelpunktes des Fahrzeugs sowie ein von dem Lenkwinkelsensor gemessener Lenkwinkel $\delta_{ist}$ zur einer kontinuierlichen Positions- und Gierwinkelbestimmung ($\psi$) relativ zu einem beim Start gesetzten Koordinatensystem berechnet wird.

6. Verfahren nach einem der Ansprüche 1 bis 5, **dadurch gekennzeichnet, dass** eine aktuelle Position des Fahrzeugs ermittelt wird, mit den folgenden Schritten:

   - Bestimmung einer Strecke $\Delta s$, um die sich das Fahrzeug seit einem letzten Abtastschritt bewegt hat, auf Grundlage von den Raddrehzahlsensor-Signalen und einem Skalierungsfaktor,
   - Berechnung des Gierwinkel $\psi_{ist}$ des Fahrzeugs auf Grundlage der bestimmten Strecke $\Delta s$, den Lenkwinkel- sensor-Signalen und dem Radstand $l$ des Fahrzeugs,
   - Ermittlung des jeweils aktuellen Gierwinkel $\psi_{ist}$ mittels der rekursiven Gleichung

$$\dot{\Psi}_{ist}(k+1) = \Psi_{ist}(k) + \frac{\Delta s}{l} * sin(\delta_{ist})$$

   - Bestimmung der aktuellen x-Istposition $x_{ist}$ und y-Istposition $y_{ist}$ des Hinterachsmittelpunktes aus dem aktuellen Gierwinkel und aktuellen Lenkwinkel.

7. Verfahren nach einem der Ansprüche 1 bis 6,
**dadurch gekennzeichnet, dass** auf Grundlage einer kontinuierlich ermittelten Position und eines kontinuierlich ermittelten Gierwinkels ($\psi$) relativ zu einem beim Start gesetzten Koordinatensystem sowie des Abstandes aus der seitlichen Abstandsmessung eine x- y-Position von die Parklücke begrenzenden Objektoberflächen relativ zu einem globalen Koordinatensystem berechnet werden.

8. verfahren nach einem der Ansprüche 1 bis 7,
**dadurch gekennzeichnet, dass** das Erkennen der Parklücke bzw. der die Parklücke begrenzenden Objektoberflächen unabhängig von gespeicherten Werten oder Zwischenwerten im wesentlichen nur aufgrund einer Änderung des Abstandes aus der seitlichen Abstandsmessung erfolgt.

9. Verfahren nach einem der Ansprüche 1 bis 8,
**dadurch gekennzeichnet, dass** Messwerte bzw. Sensorsignale der seitlichen Abstandsmessung und/oder Positionsbestimmung zumindest teilweise gefiltert werden.

10. Verfahren nach einem der Ansprüche 1 bis 9,
**dadurch gekennzeichnet, dass** Fronten der die Parklücke begrenzenden Fahrzeuge (Fahrzeugfronten vor und hinter der Parklücke) aus den gemessenen und außerhalb des Toleranzbereiches liegenden Werten ermittelt werden und die Fahrzeugfronten des vorherigen und des nachfolgenden Fahrzeugs vereinfacht als Geradengleichung beschrieben werden, wobei diese Gleichungen jeweils vorzugsweise durch die Methode der kleinsten Fehlerquadrate ermittelt werden.

11. Verfahren nach einem der Ansprüche 1 bis 10,
**dadurch gekennzeichnet, dass** aus den Abweichungen der Messwerte von den ermittelten Geraden die genaue X-Position der Ecke ermittelt wird.

12. Verfahren nach einem der Ansprüche 1 bis 11,
**dadurch gekennzeichnet, dass** Fronten der die Parklücke begrenzenden Fahrzeuge (Fahrzeugfronten vor und hinter der Parklücke) ermittelt werden und dass von den ermittelten Fahrzeugfronten auf einen Verlauf einer Fahrbahnbegrenzung (Bordstein) geschlossen wird.

13. Verfahren nach einem der Ansprüche 1 bis 12,
**dadurch gekennzeichnet, dass** die Ermittlung der Parklücke die folgenden Schritte aufweist:

- Warten auf eine erste Parklückenecke
- Passieren der ersten Parklückenecke
- Festlegung eines Toleranzbereiches für die erste Parklückenecke
- Festlegung eines Bereiches für eine erste Fahrzeugfront
- Berechnung eine Geradengleichung für die erste Fahrzeugfront
- Warten auf eine zweite Parklückenecke
- Berechnung der ersten Ecke
- Passieren der zweiten Ecke
- Festlegung eines Toleranzbereiches für die zweite Parklückenecke
- Warten auf einen gültigen Startbereich für ein Einpärkensmanöver
- Festlegen des gültigen Bereiches für eine zweite Fahrzeugfront
- Kontinuierliche Berechnung der Geradengleichung für die zweite Fahrzeugfront
- Kontinuierliche Berechnung der zweiten Ecke
- Berechnen der Einfahrtrajektorie

14. Parklückenvermessungsmodul für ein Fahrzeug,
wobei eine Vermessung einer Parklücke durch eine seitliche Abstandsmessung und eine Positionsbestimmung aus Signalen von Raddrehzahlsensoren und einem Lenkwinkelsensor erfolgt und ein Verfahren nach einem der Ansprüche 1-13 ausgeführt wird.

15. Einparkhilfe für ein Fahrzeug,
wobei die Einparkhilfe ein autonomes Fahren oder Lenken des Fahrzeugs auf einer Bahn für ein Einfahren in eine Parklücke ermöglicht oder einen Fahrer des Fahrzeugs bei einem Einparkvorgang auf der Bahn für das Einfahren in die Parklücke unterstützt, mittels eines auf das Lenkrad aufgebrachten Lenkmoments, wobei der Fahrer durch mindestens einen künstlichen Lenkanschlag, vorzugsweise einen oder zwei künstliche Lenkanschläge, auf der Bahn für das Einfahren in die Parklücke geführt wird,

und eine Vermessung der Parklücke durch eine seitliche Abstandsmessung und eine Positionsbestimmung aus Signalen von Raddrehzahlsensoren und einem Lenkwinkelsensor erfolgt

und ein Verfahren nach einem der Ansprüche 1-13 ausgeführt wird.

## Claims

1. A method for measuring a parking space for a vehicle, wherein a measurement of the parking space is performed by a lateral distance measurement and a determination of position based on a steering angle, preferably a steering angle measured with a steering angle sensor, and change in path information, preferably a path measured on the basis of wheel rpm sensors,

   **characterized in that**

   a Cartesian coordinate system is defined as a global Cartesian coordinate system in an initialization phase for a parking operation,

   an x-y position of the object surfaces bordering the parking space is calculated in relation to the global coordinate system, and a tolerance range for the x coordinates, in which a corner of the objects or vehicles bordering the parking space could be situated, is preselected or determined as a function of jumps in a distance value from the lateral distance measurement at the beginning of the parking space and at the end of the parking space.

2. A method for a parking assistance device for a vehicle,

   wherein the parking assistance device permits autonomous driving or steering of the vehicle on a path for driving into a parking space or assists a driver of the vehicle during a parking operation on the path for driving into the parking space by applying a steering torque to the steering wheel, wherein the driver is guided by at least one artificial steering stop, preferably one or two artificial steering stops, on the path for driving into the parking space, and a measurement of the parking space is performed by a lateral distance measurement and a determination of position from signals from wheel rpm sensors and a steering angle sensor,

   **characterized in that**

   a Cartesian coordinate system is defined as a global Cartesian coordinate system in an initialization phase for a parking operation,

   an x-y position of the object surfaces bordering the parking space is calculated in relation to the global coordinate system, and a tolerance range for the x coordinates, in which a corner of the objects or vehicles bordering the parking space could be situated, is preselected or determined as a function of jumps in a distance value from the lateral distance measurement at the beginning of the parking space and at the end of the parking space.

3. The method according to any one of Claims 1 to 2, **characterized in that** the determination of the parking space comprises the following steps:

   - approximately detecting corners of objects or vehicles bordering the parking space, in particular the vehicle corners in front of or behind the parking space,
   - determining valid ranges for fronts of the objects or vehicles bordering the parking space, in particular the vehicle fronts in front of or behind the parking space,
   - determining the fronts of the objects or vehicles bordering the parking space, in particular the vehicle fronts in front of or behind the parking space, and
   - calculating the corners of the objects or vehicles bordering the parking space, in particular the vehicle corners in front of or behind the parking space, from these valid ranges.

4. The method according to any one of Claims 1 to 3,

   **characterized in that** the signals of the wheel rpm sensors are interrupt signals of the rear wheel rpm sensors of the wheels on a rear axle (rear wheels), and depending on these preferably averaged signals, a change in path of the rear axle midpoint is determined, in particular with respect to a Cartesian coordinate system.

5. The method according to any one of Claims 1 to 4,

   **characterized in that** a change in path of the rear axle midpoint of the vehicle and a steering angle $\delta_{ist}$ measured by the steering angle sensor are calculated for a continuous determination of position and yaw angle ($\psi$) in relation to a coordinate system set at the start.

6. The method according to any one of Claims 1 to 5, **characterized in that** a current vehicle position is determined with the following steps:

- determining a distance $\Delta s$ by which the vehicle has moved since a last scanning step on the basis of the wheel rpm sensor signals and a scaling factor,
- calculating the yaw angle $\psi_{ist}$ of the vehicle on the basis of the distance $\Delta s$ determined, the steering angle sensor signals and the wheel base $l$ of the vehicle,
- determining the prevailing yaw angle $\psi_{ist}$ by means of the recursive equation

$$\dot{\Psi}_{ist}(k+1) = \Psi_{ist}(k) + \frac{\Delta s}{l} * sin(\hat{\delta}_{ist})$$

- determining the current actual x position $x_{ist}$ and actual y position $y_{ist}$ of the rear axle midpoint from the current yaw angle and the current steering angle.

7. The method according to any one of Claims 1 to 6, **characterized in that** on the basis of a continuously determined position and a continuously determined yaw angle ($\psi$) in relation to a coordinate system set at the start and the distance from the lateral distance measurement, an *x-y* position of the object surfaces bordering the parking space is calculated in relation to a global coordinate system.

8. The method according to any one of Claims 1 to 7, **characterized in that** the detection of the parking space or the object surfaces bordering the parking space is substantially performed independently of stored values or interim values only on the basis of a change in the distance from the lateral distance measurement.

9. The method according to any one of Claims 1 to 8, **characterized in that** measured values or sensor signals of the lateral distance measurement and/or position determination are at least partially filtered.

10. The method according to any one of Claims 1 to 9, **characterized in that** fronts of the vehicles bordering the parking space (vehicle fronts in front of and behind the parking space) are determined from the measured values that are outside of the tolerance range and the vehicle fronts of the vehicles in front and behind are described in simplified terms by a linear equation, wherein these equations are in each case preferably determined by the method of least error squares.

11. The method according to any one of Claims 1 to 10, **characterized in that** the exact x position of the corner is determined from the deviations of the measured values from the straight lines thus determined.

12. The method according to any one of Claims 1 to 11, **characterized in that** fronts of the vehicles bordering the parking space (vehicle fronts in front of and behind the parking space) are determined and a shape of a border of the roadway (curb) is deduced from the determined vehicle fronts.

13. The method according to any one of Claims 1 to 12, **characterized in that** the determination of the parking space comprises the following steps:

- waiting for a first parking space corner
- passing the first parking space corner
- defining a tolerance range for the first parking space corner
- defining a range for a first vehicle front
- calculating a linear equation for the first vehicle front
- waiting for a second parking space corner
- calculating the first corner
- passing the second corner
- defining a tolerance range for the second parking space corner
- waiting on a valid starting range for a parking maneuver
- defining the valid range for a second vehicle front
- continuously calculating the linear equation for the second vehicle front
- continuously calculating the second corner

- calculating the forward trajectory

14. A module for measuring a parking space for a vehicle,
wherein a measurement of a parking space is performed by a lateral distance measurement and a determination of position from signals from wheel rpm sensors and a steering angle sensor, and a method according to any one of Claims 1-13 is executed.

15. A parking assistance device for a vehicle,
wherein the parking assistance device permits autonomous driving or steering of the vehicle on a path for driving into a parking space or assists a driver of the vehicle during a parking operation on the path for driving into a parking space by applying a steering torque to the steering wheel, wherein the driver is guided by at least one artificial steering stop, preferably one or two artificial steering stops, on the path for driving into the parking space,
and a measurement of the parking space is performed by a lateral distance measurement and a determination of position from signals from wheel rpm sensors and a steering angle sensor,
and a method according to any one of Claims 1-13 is executed.


## Revendications

1. Procédé de mesure d'un emplacement de stationnement pour un véhicule, une mesure de l'emplacement de stationnement s'effectuant par une mesure de distance latérale et une définition de position à partir d'un angle de braquage, de préférence un angle de braquage mesuré avec un capteur d'angle de braquage, et d'une information de changement de course, de préférence une course mesurée sur la base de capteurs de vitesse de rotation de roue, **caractérisé en ce**
**qu'**un système de coordonnées cartésiennes est stipulé en tant que système de coordonnées cartésiennes global dans une phase d'initialisation pour un processus de stationnement,
une position x-y de surfaces d'objets limitant l'emplacement de stationnement relativement au système de coordonnées global est calculée, et en ce que, en fonction de sauts d'une valeur de distance à partir de la mesure de distance latérale au début de l'emplacement de stationnement et à la fin de l'emplacement de stationnement, une plage de tolérance pour les coordonnées x est fixée à l'avance ou déterminée, dans laquelle un coin des objets ou véhicules limitant l'emplacement de stationnement pourrait se situer.

2. Procédé pour une aide au stationnement pour un véhicule, l'aide au stationnement permettant une conduite ou un braquage autonome du véhicule sur une voie pour une entrée dans un emplacement de stationnement, ou aidant un conducteur du véhicule lors d'un processus de stationnement sur la voie pour l'entrée dans l'emplacement de stationnement, au moyen d'un couple de braquage appliqué au volant de direction, le conducteur étant, par au moins une butée de braquage artificielle, de préférence une ou deux butées de braquage artificielles, guidé sur la voie pour l'entrée dans l'emplacement de stationnement,
et en ce qu'une mesure de l'emplacement de stationnement s'effectue par une mesure de distance latérale et une définition de position à partir de signaux de capteurs de vitesse de rotation de roue et d'un capteur d'angle de braquage **caractérisé en ce**
**qu'**un système de coordonnées cartésiennes est stipulé en tant que système de coordonnées cartésiennes global dans une phase d'initialisation pour un processus de stationnement,
une position x - y de surfaces d'objets limitant l'emplacement de stationnement relativement au système de coordonnées global est calculée, et en ce que, en fonction de sauts d'une valeur de distance à partir de la mesure de distance latérale au début de l'emplacement de stationnement et à la fin de l'emplacement de stationnement, une plage de tolérance pour les coordonnées x est fixée à l'avance ou déterminée, dans laquelle un coin des objets ou véhicules limitant l'emplacement de stationnement pourrait se situer.

3. Procédé selon l'une des revendications 1 à 2,
**caractérisé en ce que** la détermination de l'emplacement de stationnement présente les étapes suivantes :

- détection grossière de coins des objets ou véhicules limitant l'emplacement de stationnement, en particulier des coins de véhicules devant et derrière l'emplacement de stationnement,
- définition de plages valides pour des fronts des objets ou véhicules limitant l'emplacement de stationnement, en particulier des fronts de véhicules devant et derrière l'emplacement de stationnement,
- définition des fronts des objets ou véhicules limitant l'emplacement de stationnement, en particulier des fronts de véhicules devant et derrière l'emplacement de stationnement, et

- calcul, à partir de ces plages valides, des coins des objets ou véhicules limitant l'emplacement de stationnement, en particulier des coins de véhicules devant ou derrière l'emplacement de stationnement.

4. Procédé selon l'une des revendications 1 à 3,
**caractérisé en ce que** les signaux des capteurs de vitesse de rotation de roue sont des signaux d'interruption des capteurs de vitesse de rotation de roue arrière des roues d'un essieu arrière (roues arrière) et **en ce que**, conformément à ces signaux de préférence pondérés, il est déterminé un changement de course parcouru du point central d'essieu arrière, en particulier en ce qui concerne un système de coordonnées cartésiennes.

5. Procédé selon l'une des revendications 1 à 4,
**caractérisé en ce qu'**il est calculé un changement de course du point central d'essieu arrière du véhicule ainsi qu'un angle de braquage $\delta_{ist}$ mesuré par le capteur d'angle de braquage pour une définition continue de position et d'angle d'embardée ($\psi$) relativement à un système de coordonnées fixé lors du démarrage.

6. Procédé selon l'une des revendications 1 à 5,
**caractérisé en ce qu'**une position actuelle du véhicule est déterminée, avec les étapes suivantes :

- définition d'un trajet $\Delta s$ sur lequel le véhicule s'est déplacé depuis une dernière étape de balayage, sur la base des signaux de capteurs de vitesse de rotation de roue et d'un facteur d'échelle,
- calcul de l'angle d'embardée $\psi_{ist}$ du véhicule sur la base du trajet $\Delta s$ défini, des signaux de capteur d'angle de braquage et de l'empattement *l* du véhicule,
- détermination de l'angle d'embardée $\psi_{ist}$ respectivement actuel au moyen de l'équation récursive

$$\Psi_{ist}(k+1) = \Psi_{ist}(k) + \frac{\Delta s}{l} * sin(\delta_{ist})$$

- définition de la position effective actuelle $x_{ist}$ et de la position effective y $y_{ist}$ du point central d'essieu arrière à partir de l'angle d'embardée actuel et de l'angle de braquage actuel.

7. Procédé selon l'une des revendications 1 à 6,
**caractérisé en ce que**, sur la base d'une position déterminée de façon continue et d'un angle d'embardée ($\psi$) déterminé de façon continue relativement à un système de coordonnées fixé lors du démarrage ainsi que de la distance à partir de la mesure de distance latérale, une position x-y de surfaces d'objets limitant l'emplacement de stationnement relativement à un système de coordonnées global est calculée.

8. Procédé selon l'une des revendications 1 à 7,
**caractérisé en ce que** la détection de l'emplacement de stationnement ou respectivement des surfaces d'objets limitant l'emplacement de stationnement s'effectue indépendamment de valeurs ou valeurs intermédiaires enregistrées essentiellement uniquement sur la base d'une modification de la distance par rapport à la mesure de distance latérale.

9. Procédé selon l'une des revendications 1 à 8,
**caractérisé en ce que** des valeurs de mesure ou respectivement des signaux de capteur de la mesure de distance latérale et/ou de la définition de position sont filtrés au moins partiellement.

10. Procédé selon l'une des revendications 1 à 9,
**caractérisé en ce que** des fronts des véhicules limitant l'emplacement de stationnement (fronts de véhicules devant et derrière l'emplacement de stationnement) sont déterminés à partir des valeurs mesurées et situées à l'extérieur de la plage de tolérance, et les fronts des véhicules du véhicule précédent et du véhicule suivant sont décrits de façon simplifiée en tant qu'équation d'une droite, ces équations étant déterminées respectivement de préférence par la méthode des moindres carrés.

11. Procédé selon l'une des revendications 1 à 10,
**caractérisé en ce que** la position x précise du coin est déterminée à partir d'écarts des valeurs de mesure à des droites déterminées.

**12.** Procédé selon l'une des revendications 1 à 11,
**caractérisé en ce que** des fronts des véhicules limitant l'emplacement de stationnement (fronts de véhicules devant et derrière l'emplacement de stationnement) sont déterminés et **en ce qu'**un tracé d'une délimitation de voie de circulation (bordure de trottoir) est déduit à partir des fronts de véhicules déterminés.

**13.** Procédé selon l'une des revendications 1 à 12,
**caractérisé en ce que** la détermination de l'emplacement de stationnement présente les étapes suivantes :

- attente d'un premier coin d'emplacement de stationnement
- franchissement du premier coin d'emplacement de stationnement
- fixation d'une plage de tolérance pour le premier coin d'emplacement de stationnement
- fixation d'une plage pour un premier front de véhicules
- calcul d'une équation de droite pour le premier front de véhicules
- attente d'un deuxième coin d'emplacement de stationnement
- calcul de premier coin
- franchissement du deuxième coin
- fixation d'une plage de tolérance pour le deuxième coin d'emplacement de stationnement
- attente d'une plage de démarrage valide pour une manoeuvre de stationnement
- fixation de la plage valide pour un deuxième front de véhicules
- calcul de façon continue de l'équation de droite pour le deuxième front de véhicules
- calcul de façon continue du deuxième coin
- calcul de la trajectoire d'entrée.

**14.** Module de mesure d'emplacement de stationnement pour un véhicule,
une mesure d'un emplacement de stationnement s'effectuant par une mesure de distance latérale et une définition de position à partir de signaux de capteurs de vitesse de rotation de roue et d'un capteur d'angle de braquage, et un procédé selon l'une des revendications 1-13 étant réalisé.

**15.** Aide au stationnement pour un véhicule,
l'aide au stationnement permettant une conduite ou un braquage autonome du véhicule sur une voie pour une entrée dans un emplacement de stationnement, ou aidant un conducteur du véhicule lors d'un processus de stationnement sur la voie pour l'entrée dans l'emplacement de stationnement, au moyen d'un couple de braquage appliqué au volant de direction, le conducteur étant, par au moins une butée de braquage artificielle, de préférence une ou deux butées de braquage artificielles, guidé sur la voie pour l'entrée dans l'emplacement de stationnement, et une mesure de l'emplacement de stationnement étant effectuée par une mesure de distance latérale et une définition de position à partir de signaux de capteurs de vitesse de rotation de roue et d'un capteur d'angle de braquage,
et un procédé selon l'une des revendications 1-13 étant réalisé.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19940007 A1